Europäisches Patentamt

European Patent Office

Office européen des brevets

(11) Veröffentlichungsnummer: **0 153 458**
A2

(12) **EUROPÄISCHE PATENTANMELDUNG**

(21) Anmeldenummer: 84114611.1

(22) Anmeldetag: 01.12.84

(51) Int. Cl.⁴: **G 01 B 3/56**

(30) Priorität: 23.02.84 DE 3406492

(43) Veröffentlichungstag der Anmeldung:
04.09.85 Patentblatt 85/36

(84) Benannte Vertragsstaaten:
AT BE CH FR LI LU NL

(71) Anmelder: Heinz Markus GmbH
Schlosserstrasse 8
D-5630 Remscheid 11(DE)

(72) Erfinder: Faubel, Udo
Blaffertsberg 49
D-5600 Wuppertal 21(DE)

(74) Vertreter: Patentanwälte Dr. Solf & Zapf
Schlossbleiche 20 Postfach 13 01 13
D-5600 Wuppertal 1(DE)

(54) Winkel.

(57) Winkel, bestehend aus einem kurzen und einem als Winkelklinge (2) ausgebildeten langen Schenkel, wobei der kurze Winkelschenkel (1) vorzugsweise als Gußteil ausgebildet ist. Der kurze Schenkel (1) weist auf seiner Oberseite Haltefortsätze (7) auf, die ein oder mehrere Löcher der auf der Oberseite aufliegenden Klinge (2) formschlüssig durchgreifen, und eine Abdeckplatte (6) die Klinge (2) von oben auf dem kurzen Schenkel (1) fixiert.

FIG.1

EP 0 153 458 A2

0153458

- 1 -

II/mj/3046

Firma Heinz Markus GmbH, Schlosserstr. 8,
5630 Remscheid 11

---

Winkel

---

Die vorliegende Erfindung betrifft einen Winkel, bestehend
aus einem kurzen und einem als Winkelklinge ausgebildeten
langen Schenkel, wobei der kurze Schenkel als Gußteil
hergestellt ist.

Bei diesen bekannten Winkeln wird die Stahlklinge in die
zweiteilige Gußform zur Herstellung des kurzen Winkels
eingelegt und dann wird der kurze Schenkel verspritzt,
so daß nach dem Spritzvorgang die Stahlklinge fest eingeschlossen ist. Dieses Verfahren ist jedoch sehr aufwendig
und darüber hinaus besteht die Schwierigkeit,die Stahlklinge
genau innerhalb der Gußform auszurichten, um einen sehr
präzisen Winkel zu erhalten. Hieraus resultieren bei derartig hergestellten Winkeln relativ große Winkeltoleranzen.

Aus diesem Grunde ist es ebenfalls bekannt, um die Genauigkeit zu verbessern, die Stahlklinge an dem kürzeren Winkelschenkel durch Nieten zu befestigen. Das Vernieten stellt

Fig.1 eine Draufsicht auf einen erfindungsgemäßen Winkel,

Fig.3 eine Ansicht einer weiteren Ausführung eines erfindungsgemäßen kurzen Schenkels,

Fig.4 einen Schnitt entlang der Schnittlinie III-III

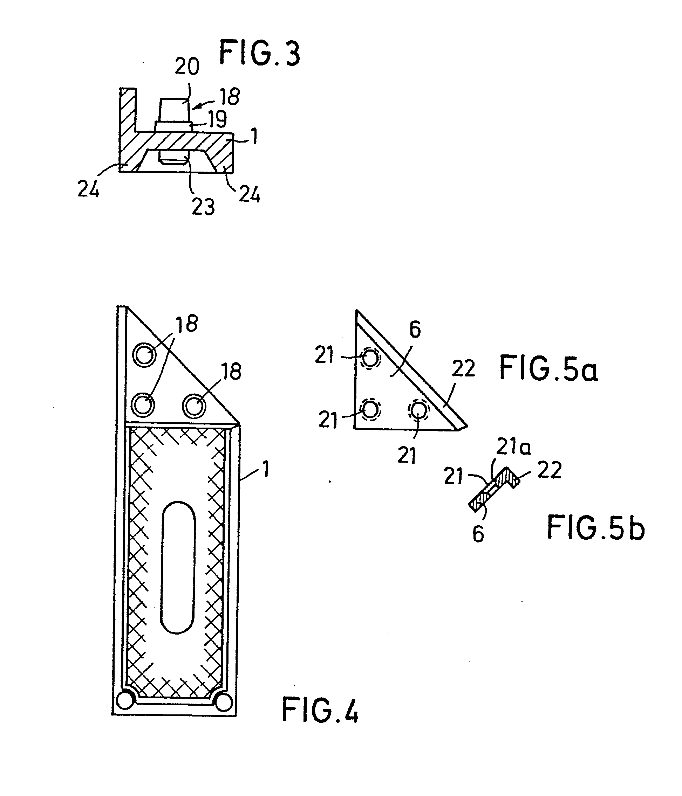

in Fig. 3,

Fig.5 eine Ansicht einer erfindungsgemäßen Abdeckplatte
für den Schenkel gemäß Fig.3,

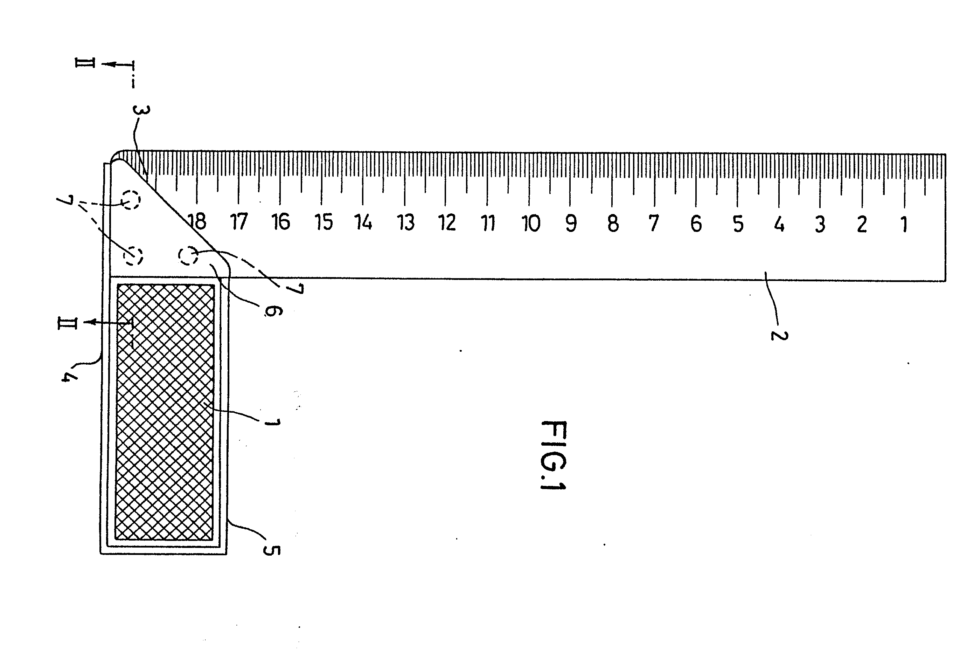

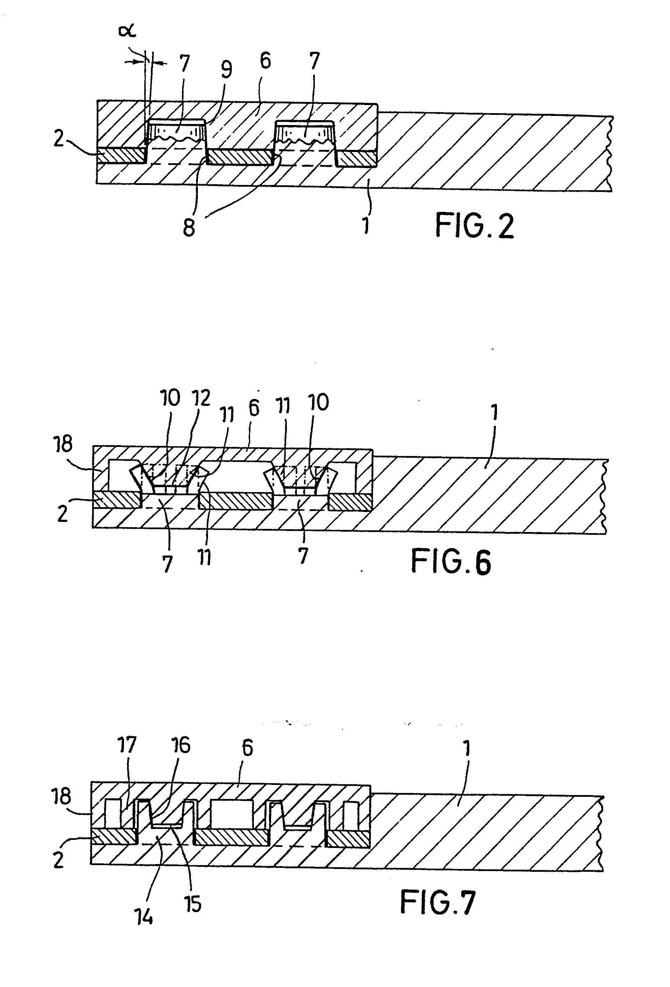

Fig. 2, 6 und 7 jeweils einen Schnitt entlang der Schnittlinie II-II in Fig. 1 bei unterschiedlichen Ausführungsformen des erfindungsgemäßen Winkels.

Wie sich aus Fig. 1 ergibt, besteht ein erfindungsgemäßer
Winkel aus einem kurzen Winkelschenkel 1 und einem langen,
als Klinge ausgebildeten Winkelschenkel 2. Der Winkelschenkel ist vorzugsweise als Gußteil, beispielsweise aus
Zinkdruckguß, hergestellt und der Winkelschenkel 2 ist als
Flachstahlteil ausgebildet. Der Winkelschenkel 2 ist einendig innerhalb des Winkelschenkels 1 mit diesem verbunden.
Dabei kommt es bei dieser Verbindung insbesondere auf die
erreichte Winkelpräzision an. Vorzugsweise ist der kurze
Winkelschenkel 1 in seinem dem langen Winkelschenkel 2 zugekehrten Endbereich an seiner Oberkante etwa um 45° abgeschrägt,
so daß sich eine schrägverlaufende Seitenkante 3 zwischen
seiner Außenkante 4 und seiner Innenkante 5 ergibt. Die schräge Seitenkante 3 wird auf einer Seite des erfindungsgemäßen
Winkels von einer Abdeckplatte 6 gebildet, die die Form beim
dargestellten vorzugsweisen Ausführungsbeispiel eines rechtwinkligen Dreiecks besitzt. Diese Abdeckplatte 6 kann beispielsweise aus Kunststoff oder auch aus Zinkdruckguß bestehen. Ebenfalls kann diese Abdeckplatte aus Holz gefertigt
werden. Mit der Abdeckplatte 6 wird der lange Winkelschenkel
2 auf dem Winkelschenkel 1 fixiert.

Wie sich aus Fig. 2 ergibt, weist der kurze Winkelschenkel 1 zur Befestigung und Fixierung einerseits des Winkelschenkels 2 und andererseits der Abdeckplatte 6 im dargestellten Ausführungsbeispiel drei Fortsätze 7 auf, die jeweils etwa in den Ecken des durch die Abdeckplatte 6 gebildeten rechtwinkligen Dreiecks liegen. Diese Fortsätze 7 haben die Form eines Kegelstumpfes, so daß sie sich in Richtung auf die Abdeckplatte 6 unter einem Neigungswinkel $\alpha$ von vorzugsweise 2-3° verjüngen. Der lange Winkelschenkel 2 weist in seinem Verbindungsbereich Löcher 8 auf, mit denen der Winkelschenkel 2 auf die Fortsätze 7 aufgepreßt wird. Dabei ist der Durchmesser der Löcher 8 im nicht aufgesetzten Zustand größer als der Kopfdurchmesser der Fortsätze 7 und kleiner als der Fußdurchmesser der Fortsätze 7. Hierdurch wird erreicht, daß beim Befestigen des Winkelschenkels 2 dessen Löcher 8 aufgeweitet werden und somit im Endzustand, d.h. bei der Anlage des Winkelschenkels an dem kurzen Winkelschenkel 1 mit Preßsitz auf den Fortsätzen 7 sitzen. Zur Abdeckung und weiteren Sicherung wird nun von oben auf die Fortsätze 7 die Abdeckplatte 6 aufgedrückt, wobei die Abdeckplatte 6 an ihrer dem Winkelschenkel 2 zugekehrten Unterseite den Fortsätzen 7 angepaßte Ausnehmungen 9 aufweist. Durch den angepaßten konischen Verlauf einerseits der Fortsätze 7 und andererseits der Ausnehmungen 9 innerhalb der Abdeckplatte 6 wird ein Preßsitz auch der Abdeckplatte 6 erreicht. Zusätzlich kann diese noch durch Vermittlung einer Klebeschicht befestigt werden.

In den Fig. 3, 4 und 5 ist ein weiteres Ausführungsbeispiel dargestellt. Dabei sind gleiche Teile, wie in den Fig. 1 und 2, mit denselben Bezugsziffern versehen. Auch bei dieser Ausführungsform sind drei Fortsätze 18 vorhanden. Diese Fortsätze bestehen aus einem unteren, kürzeren zylindrischen Abschnitt 19 und einem oberen kegelstumpfförmigen Abschnitt 20, wobei der Neigungswinkel $\alpha$ des Kegelstumpfes etwa 2 - 3° beträgt. Die Fortsätze 18 dienen als Nietfortsätze zum Vernieten der Abdeckplatte 6 auf dem kurzen Winkelschenkel 1, wozu dieser Durchgangsöffnungen 21 aufweist, die eine äußere Ringfase 21a besitzen, die zur Aufnahme des Nietkopfes dient, und zwar nach Vernieten der Fortsätze 18. Zur Verstärkung im Nietbereich verlaufen die Fortsätze 18 durch die Abdeckplatte 6 hindurch, so daß auf der gegenüberliegenden Seite Ansätze 23 vorhanden sind. Hierdurch wird weiterhin ermöglicht, um die Ansätze 23 herum das Material aus dem kurzen Winkelschenkel zu entfernen, so daß nur noch äußere Randstege 24 verbleiben. Die Abdeckplatte 6 hat an ihrer dem rechten Winkel gegenüberliegenden Seite einen Steg 22, mit dem sie sich auf dem zwischen Abdeckplatte und kurzen Winkelschenkel eingelegten langen Winkelschenkel 2 abstützt. Der Außendurchmesser des zylindrischen Abschnitts 19 ist größer als der Durchmesser der Durchgangsbohrung 21.

Wie die vorstehende Beschreibung des erfindungsgemäßen Winkels zeigt, ergibt sich somit eine äußerst einfache und kostengünstige Herstellung, da einerseits die Einzelteile aufgrund ihrer konstruktiven Ausgestaltung eine sehr einfache Herstellung erlauben und andererseits auch durch das einfache Zusammenfügen schnell montiert werden können, und zwar mittels hierzu geeigneter Maschinen.

In Fig. 6 ist eine weitere Befestigungsform der Einzelteile miteinander dargestellt. Hierbei weist der kurze
Winkelschenkel 1 Fortsätze 7 auf, die eine mittlere
Ausnehmung 10 aufweisen. Diese Ausnehmung 10 wird umfangsgemäß durch einen Ausnehmungsrand 11 begrenzt, der mindestens
zwei einander gegenüberliegende Längsschlitze aufweist,
so daß eine Umbiegung der dadurch gebildeten Seitenwandabschnitte ermöglicht wird. Die ungebogenen Seitenwandabschnitte sind in Fig. 6 gestrichelt eingezeichnet.

Die Umbiegung dieser Seitenwandabschnitte erfolgt durch
Ansätze 12 an der dem langen Winkelschenkel zugekehrten
Unterseite der Abdeckplatte 6. Hierzu sind die Ansätze
12 als Kegelstumpf ausgebildet, wobei die kleinere Kopffläche der Ansätze 12 den Fortsätzen 7 zugekehrt ist.

Der Durchmesser der Ansätze 12 ist derart gewählt, daß
beim Einpressen der Ansätze 12 in die von der Seitwand
11 umschlossene Ausnehmung ein Umbiegen der Seitenwandabschnitte im Sinne einer Öffnungserweiterung erfolgt,
bis die Seitenwandabschnitte 11 gegen die Oberseite
des längeren Winkelschenkels 2 anliegen und dadurch
diesen Winkelschenkel 2 fixieren. Durch die Verpressung
der Ansätze 12 mit den Fortsätzen 7 erfolgt gleichzeitig
auch eine Fixierung der Abdeckplatte 6. Zusätzlich kann
die Abdeckplatte 6 auch mittels eines Klebers noch befestigt werden.

In Fig. 7 ist eine weitere alternative Befestigungsmöglichkeit der erfindungsgemäßen Winkelteile dargestellt.
Hierbei weist der kürzere Schenkel wiederum Fortsätze
14 auf, die eine mittlere Ausnehmung 15 besitzen, die
in ihrer Form Ansätzen 16 der Abdeckplatte 6 angepaßt
sind, die wiederum kegelstumpfförmig ausgebildet sind und mit ihrer kleineren Fläche den Fortsätzen 14 zugekehrt sind. Konzentrisch zu den Ansätzen 16 weist die Abdeckplatte 6 jeweils Ringkragen 17 auf, die im montierten Zustand der Abdeckplatte 6 mit ihrer Endfläche auf dem längeren Winkelschenkel 2 aufliegen und somit diesen zwischen der Abdeckplatte 6 und dem kürzeren Winkelschenkel 1 fixieren. Durch die in ihrer Form angepaßten Ansätze 16 und Ausnehmungen 15 ergibt sich eine selbsthaltende Befestigung der Abdeckplatte 6, die zusätzlich noch durch ein Verkleben gesichert werden kann.

Wie sich aus den Fig. 2 bis 7 ergibt, weist der kürzere Winkelschenkel 1 im Bereich der Abdeckplatte 6 eine geringere Dicke auf als im übrigen Bereich und die Abdeckplatte 6 ist derart in ihrer Dicke dimensioniert, daß sie mit der Oberseite des dickeren Bereiches des kürzeren Winkelschenkels 1 bündig abschließt. Wie sich insbesondere aus den Fig. 6 und 7 ergibt, weist die Abdeckplatte 6 bei diesen Ausführungsbeispielen einen umlaufenden Randsteg 18 auf, so daß die Abdeckplatte ebenfalls mit den Seitenrändern des kürzeren Winkelschenkels bündig ist. Bei den Ausführungen der Fig.3,6 und 7 besitzt die Klinge 2 jeweils an die Fortsätze 7 bzw. 14 derart angepaßte Löcher 8, daß ein praktisch spielfreier Sitz vorhanden ist.

II/mj/3046

Firma Heinz Markus GmbH, Schlosserstr. 8,
5630 Remscheid 11

---

Ansprüche:

1. Winkel, bestehend aus einem kurzen und einem als
Winkelklinge ausgebildeten langen Schenkel, wobei
der kurze Winkelschenkel vorzugsweise als Gußteil
ausgebildet ist, d a d u r·c h  g e k e n n z e i c h-
n e t, daß der kurze Schenkel (1) auf seiner Oberseite
Haltefortsätze (7,14,18) aufweist, die ein oder'
mehrere Löcher (8) der auf der Oberseite aufliegenden
Klinge (2) formschlüssig durchgreifen, und eine Abdeckplatte (6)    die Klinge (2) von oben auf dem kurzen
Schenkel (1) fixiert.

2. Winkel nach Anspruch 1, d a d u r c h  g e k e n n-
z e i c h n e t, daß mindestens zwei, vorzugsweise
drei, in den Ecken eines rechtwinkligen Dreiecks
angeordnete Fortsätze (7, 10, 14,18) ausgebildet sind,
wobei vorzugsweise der kürzere Schenkel im Verbindungsbereich endseitig eine abgeschrägte Seitenkante (3)
aufweist und die Abdeckplatte (6) einseitig die abgeschrägte Seitenkante (3) bildet.

3. Winkel nach Anspruch 1 oder 2, d a d u r c h  g e-
k e n n z e i c h n e t, daß die Fortsätze (7, 18)
die Form eines Kegelstumpfes besitzen.

4. Winkel nach einem oder mehreren der Ansprüche 1 bis 3,
d a d u r c h  g e k e n n z e i c h n e t, daß die
Abdeckplatte (6) mittels der Fortsätze (18) vernietet
ist.

5. Winkel nach Anspruch 4, d a d u r c h  g e k e n n-
z e i c h n e t, daß die Fortsätze einen unteren zylindrischen Abschnitt (18) besitzen und die Abdeckplatte
(6) Durchgangsöffnungen (21) mit einer äußeren Ringfase (21 a).

6. Winkel nach Anspruch 2 oder 3, d a d u r c h  g e-
k e n n z e i c h n e t, daß die Abdeckplatte (6) auf
ihrer der Klinge (2) zugekehrten Seite kegelstumpfförmige Ansätze (12) aufweist, die in ihrer Form angepaßte
Ausnehmungen (15) von Haltefortsätzen (14) hineinragen
und von konzentrischen Ringkragen (17) umgeben sind,
die endseitig an der Klinge anliegen und in Verbindung
mit den zugeordneten Ansätzen die jeweiligen Haltefortsätze klemmend umschließen.

7. Winkel nach Anspruch 2 oder 3, d a d u r c h  g e-
k e n n z e i c h n e t, daß die Abdeckplatte (6) auf
ihrer der Klinge (2) zugekehrten Seite Ansätze (12)
aufweist, die derart ausgebildet sind, daß sie im montierten Zustand in eine zugeordnete Ausnehmung (10)
der Haltefortsätze (7) derart eingreifen, daß die längsgeschlitzte Begrenzungswand (11) der Ausnehmung im
Sinne einer Ausnehmungserweiterung gespreizt und hierdurch die Klinge fixiert wird.

8. Winkel nach einem oder mehreren der Ansprüche 1 bis 5, d a d u r c h   g e k e n n z e i c h n e t, daß die Abdeckplatte (6) aus Kunststoff besteht.

9. Winkel nach einem oder mehreren der Ansprüche 1 bis 6, d a d u r c h   g e k e n n z e i c h n e t, daß die Abdeckplatte (6) mindestens an der dem rechten Winkel gegenüberliegenden Seite einen Randsteg (18,22) besitzt, der bündig mit der Außenkante des kurzen Schenkels (1) abschließt.

10. Winkel nach einem oder mehreren der Ansprüche 1 bis 9, d a d u r c h   g e k e n n z e i c h n e t, daß der kurze Winkelschenkel (1) im Bereich der Abdeckplatte (6) eine um die Dicke der Abdeckplatte (6) und die des langen Winkelschenkels (2) reduzierte Dicke aufweist.

FIG.1

FIG.2

FIG.6

FIG.7

3046

0153458

## FIG.3

## FIG.4

## FIG.5a

## FIG.5b